# EUROPEAN PATENT APPLICATION

(11) **EP 4 672 564 A1**
(43) Date of publication of application: **31.12.2025**
(21) Application number: 24774188.7
(22) Date of filing: 21.03.2024
(51) Int. Cl.: H02K 3/50

(54) **STATOR ASSEMBLY AND MANUFACTURING METHOD THEREFOR, AND MOTOR**

(30) Priority: 23.03.2023 CN 202310316794
(71) Applicant: Zhejiang Sanhua Intelligent Controls Co., Ltd., Shaoxing, Zhejiang 312500 (CN)
(72) Inventor: ZHAO, Yangjun, Shaoxing, Zhejiang 312500 (CN); ZHU, Jiangjun, Shaoxing, Zhejiang 312500 (CN)
(74) Representative: Michalski Hüttermann & Partner Patentanwälte mbB
(86) International application number: PCT/CN2024/082862
(87) International publication number: WO 2024/193623

(57) **Abstract**

The present invention discloses a stator assembly, a motor, and a manufacturing method for the stator assembly. The stator assembly includes a stator and a main control board arranged at an axial outer end of the stator. The stator is spliced together by a plurality of stator cores. A stator winding is wound around the stator core. The stator winding has a wring terminal. The main control board has at least two spaced-apart connection slots. At least a portion of an inner circumferential wall of the connection slot is provided with a first conductive portion. The wiring terminal is disposed in the connection slot. The wiring terminal is electrically connected to the first conductive portion. The winding connection structure has a simple process and is easy to install, and can simplify the current connection structure of the wiring terminal of the stator winding.

## Description

### TECHNICAL FIELD

The present invention relates to the technical field of motors, and in particular to a stator assembly, a motor, and a method for manufacturing the stator assembly.

### BACKGROUND

An existing wiring method for a motor stator winding is to first fix lead wires of stator windings using one or more busbars, and then weld the lead wires. The busbars are then injection-molded into an insulating plastic, and the lead wires of the stator windings are connected via the busbars. The busbars and the lead wires of the stator windings are first crimped together and then resistance-welded. The busbars are then encased in a plastic insulating bracket. This connection method suffers from complex processing and high costs. Specifically, the use of bracket and busbars to connect the windings, coupled with multiple crimping, welding and injection molding processes, results in complex processing steps and high material costs.

### SUMMARY

In view of the above defects or shortcomings, the present invention provides a stator assembly of which the stator windings are able to simplify the current connection structure of the wiring terminals of the stator windings.

To achieve the above objectives, the present invention provides a stator assembly, and the specific technical solution is as follows:
a stator assembly including: a stator and a main control board disposed at an axial outer end of the stator, the stator including a plurality of stator cores, the stator cores being wound with stator windings, the stator windings including wiring terminals; wherein the main control board defines at least two connection slots which are spaced apart; at least a portion of an inner peripheral wall of each connection slot is provided with a first conductive portion; the wiring terminal is disposed in the connection slot; and the wiring terminal is electrically connected to the first conductive portion.

The connection scheme adopted by the stator windings of the stator assembly is easy to install, and the connection structure of the wiring terminal of the stator winding is relatively simplified.

The present invention also provides a method for manufacturing a stator assembly, including following steps:
performing insert molding on a single stator core to form a stator core with an insulating frame; winding a stator winding onto the stator core with the insulating frame, and forming a wiring terminal for each stator winding; splicing the single stator core wound with the stator winding along a circumferential direction to form a stator; mounting a main control board with connection slots at an axial outer end of the stator, and mounting the wiring terminals in the connection slots in a one-to-one correspondence manner; and electrically connecting the wiring terminal to a first conductive portion on an inner wall of the connection slot by welding.

The stator assembly manufactured by the above-mentioned manufacturing method of the stator assembly has a simple connection structure of the stator winding, and is easy to install.

The present invention also provides a motor, the motor including: a stator assembly, a rotor assembly and a shell, the stator assembly being disposed in the shell, the stator assembly including a stator and a main control board disposed at an axial outer end of the stator, the stator including a plurality of stator cores, the stator cores being wound with stator windings, the stator windings including wiring terminals; wherein the main control board has at least two connection slots which are spaced apart; at least a portion of an inner wall of each connection slot is provided with a first conductive portion; and the wiring terminal is disposed in the connection slot, and the wiring terminal is electrically connected to the first conductive portion.

The connection structure of the stator winding of the above motor is simple and easy to install, which can relatively improve the production efficiency of the motor.

### BRIEF DESCRIPTION OF DRAWINGS

FIG. 1 shows a perspective view of a stator assembly in an existing technology;
FIG. 2 shows a perspective view of a stator assembly in accordance with a first embodiment thereof;
FIG. 3 shows an exploded view of FIG. 2;
FIG. 4 shows a perspective view of a stator core;
FIG. 5 shows a front view of the stator assembly in accordance with a second embodiment thereof;
FIG. 6 shows a front view of a main control board in accordance with the second embodiment thereof;
FIG. 7 shows a perspective view of one of the connection methods of stator windings in accordance with the second embodiment thereof;
FIG. 8 shows a front view of wiring terminals installed on the main control board in accordance with the second embodiment thereof; and

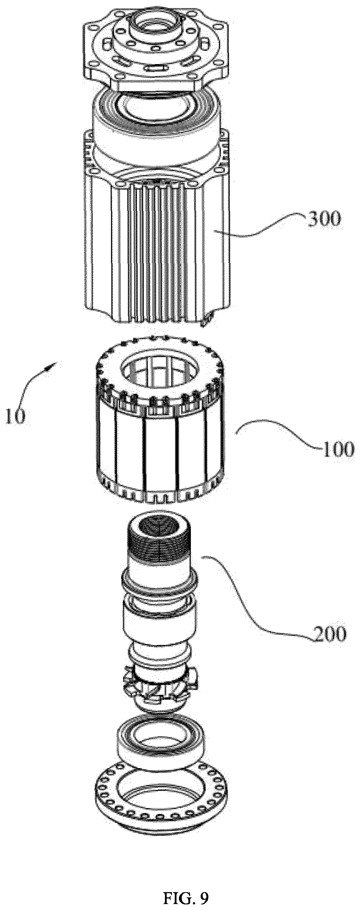

FIG. 9 shows an exploded view of a motor.

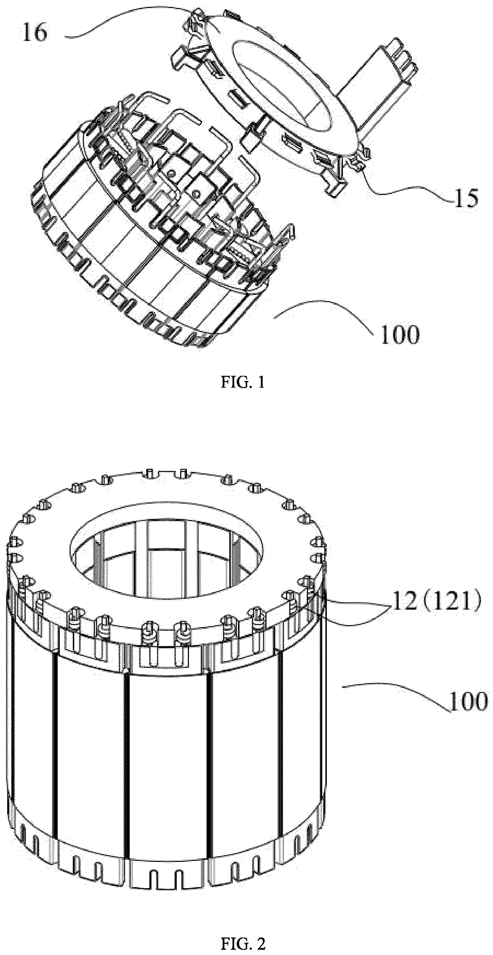

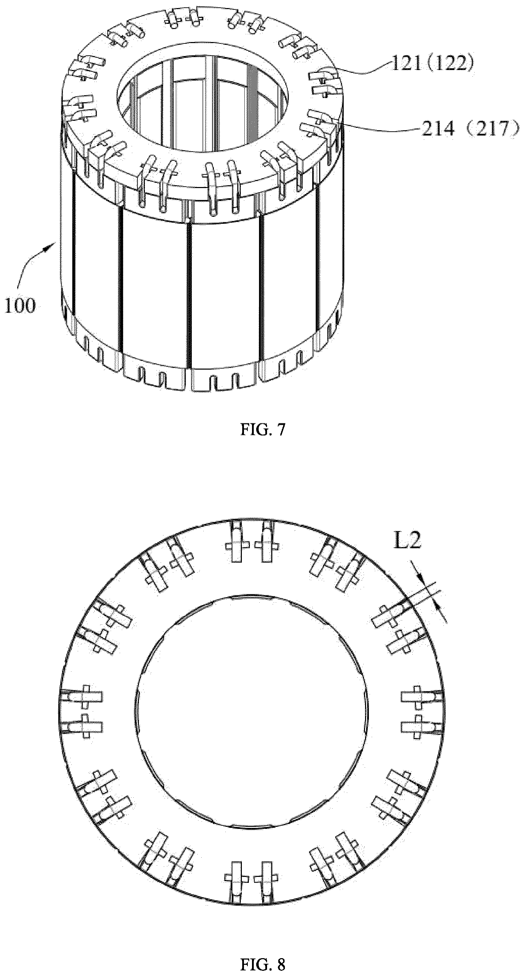

The correspondence between the figure marks and component names in FIG. 1 to FIG. 8 is as follows:
100, stator assembly; 1, stator; 2, main control board; 11, stator core; 12, stator winding; 121, wiring terminal; 21, connection slot; 211, first conductive portion; 13, pin; 14, insulating frame; 122, second conductive portion; 122', second conductive portion; 131, third conductive portion; 212, first slot section; 213, second slot section; 214, third slot section; 215, fourth conductive portion; 216, fifth conductive portion; 217, sixth conductive portion; 200, rotor assembly; 15, bus bar; 16, insulating bracket; 10, motor; 300, shell; 22, first wall; 23, second wall; 24, third wall; 25, fourth wall.

### DETAILED DESCRIPTION

In order to more clearly understand the above-mentioned objects, features and advantages of the present invention, the present invention is further described in detail below in conjunction with the accompanying drawings and specific embodiments. It should be noted that, in the absence of conflict, the embodiments of the present application and the features therein can be combined with each other.

The following description sets forth many specific details to facilitate a thorough understanding of the present invention. However, the present invention may also be implemented in other ways than those described herein. Therefore, the scope of protection of the present invention is not limited by the specific embodiments disclosed below. The present invention is further described below with reference to the accompanying drawings and examples:

An existing method for connecting stator windings of a motor is to use one or more busbars 15 to first fix lead wires of stator windings, and then weld the lead wires. Then, the busbars 15 are injection-molded into an insulating plastic. As shown in FIG. 1, wiring terminals 121 of the stator windings 12 of the motor are connected to the busbars 15. The busbars 15 and the wiring terminals 121 are first crimped and then resistance-welded. Then, the busbars 15 are encapsulated in an insulating bracket 16. This connection method has the problems of complex process and high cost. That is, due to the use of the insulating bracket 16 and the busbars 15 to connect the stator windings 12, and the use of multiple crimping, welding and injection molding processes, there are problems such as complex processing procedures and high material costs.

In order to solve the problems existing in the above-mentioned existing technology, the present invention provides a stator assembly 100, and its specific technical solution is as follows.

A stator assembly 100 includes a stator 1 and a main control board 2 disposed at an axial outer end of the stator 1. The stator 1 is spliced together by a plurality of stator cores 11. A stator winding 12 is wound around each stator core 11. The stator winding 12 includes a wiring terminal 121. The main control board 2 defines at least two connection slots 21 which are spaced from each other. At least part of an inner circumferential wall of each connection slot 21 is provided with a first conductive portion 211. The wiring terminals 121 are disposed in corresponding connection slots 21. The wiring terminal 121 is electrically connected to the first conductive portion 211, thereby realizing the conduction of the stator winding 12 and a circuit on the main control board 2. The electrical connection can be achieved by welding, and the welding method can be soldering or laser welding. This technical solution only requires the electrical connection between the wiring terminal 121 of the stator winding 12 and the first conductive portion 211 in the connection slot 21. It does not need to use an insulating bracket and a busbar to connect the stator winding, so it can simplify the current connection structure of the wiring terminal of the stator winding. Specifically, each of the stator cores 11 is wound with the stator winding 12. Each of the stator windings 12 includes two wiring terminals 121, which are electrically connected to the corresponding connection slots 21, respectively. An outer periphery of the main control board 2 defines the at least two connection slots 21 which are spaced apart along a circumference of the main control board 2. The connection slots 21 are opened outward along a radial direction of the main control board 2, and are disposed in a one-to-one correspondence manner with the wiring terminals 121.

Furthermore, in practical applications, the motor winding ends have very high requirements for wiring. The wire diameter of the stator winding used in some low-power motors is relatively thin, and is easily broken by pulling. Moreover, it is not easy to set the wiring terminal 121 of the stator winding 12 inside the connection slot 21, and it is not convenient to weld it to the first conductive portion 211 on an inner wall of the connection slot 21 to achieve electrical connection. In order to support and stabilize the wiring terminal 121 of the stator winding 12, the stator 1 can also be provided with a plurality of pins 13. The material of the pin 13 can be metal or insulating material. As viewed from an end direction of the stator 1, the pins 13 are disposed at equal distances in the circumferential direction. The stator 1 further includes an insulating frame 14. The insulating frame 14 is sleeved on an axial outer end of the stator core 11. One end of the pin 13 is inserted into the insulating frame 14, and another end of the pin 13 is recessed and disposed in the connection slot 21. The wring terminal 121 is disposed in the connection slot 21, and wraps around at least a portion of an outer side of the pin 13. Concavely positioning the pin 13 in the connection slot 21 is able to relatively reduce the height of the stator assembly 100, further shorten the axial size of the motor, and ensure the small size and lightness of the motor 10.

The material of the pin 13 in the present application can be a metal material with good electrical conductivity, such as copper or aluminum; or an insulating material, such as plastic. Of course, a metal pin 13 is stronger than an insulating pin 13, is able to more stably support the wiring terminal 121 of the stator winding 12, and is more conducive to improving welding strength and electrical connection reliability during the welding process. When the pin 13 is made of metal, the wiring terminal 121 is provided with a second conductive portion 122. The pin 13 is provided with a third conductive portion 131. The first conductive portion 211, the second conductive portion 122 and the third conductive portion 131 are electrically connected by welding. When the pin 13 is made of insulating material, the pin 13 only serves to support and stabilize the wiring terminal 121 and does not participate in the electrical connection. In this case, the wiring terminal 121 is provided with a second conductive portion 122'. The first conductive portion 211 and the second conductive portion 122' are electrically connected by welding.

The main control board 2 includes a first wall 22 and a second wall 23. The first wall 22 and the second wall 23 are disposed oppositely with each other. The connection slot 21 is located between the first wall 22 and the second wall 23. Along a radial direction of the stator assembly, a maximum distance between the first wall 22 and the second wall 23 is D1. The wiring terminal 121 is columnar, and a maximum outer diameter of the wiring terminal 121 is L1, where D1 is greater than L1. Along an axial direction of the stator assembly, the wiring terminal 121 extends for a length H1. Along the axial direction of the stator assembly, the connection slot 21 extends for a length H2, where H1 is less than H2.

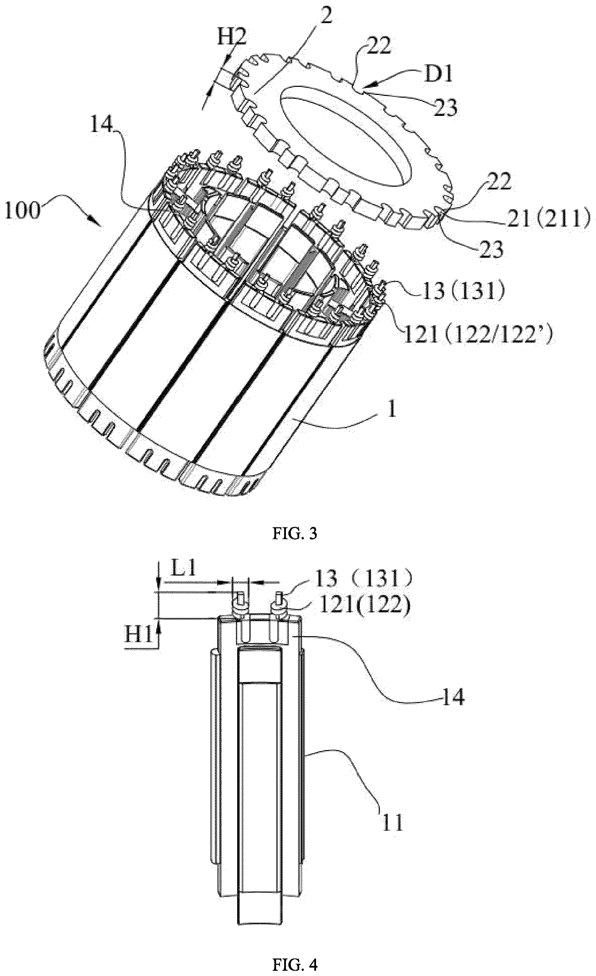

As shown in FIG. 3 and FIG. 4, the main control board 2 includes a first wall 22 and a second wall 23. The first wall 22 and the second wall 23 are disposed oppositely with each other in the radial direction of the stator assembly. The first wall 23 and the second wall 23 form the connection slot 21. In the radial direction of the stator assembly, the maximum distance between the first wall 22 and the second wall 23 is D1. That is, the maximum radial width of the connection slot 21 is D1. The wiring terminal 121 is columnar, and the maximum outer diameter of the columnar wiring terminal 121 is L1. That is, the maximum radial width of the wiring terminal 121 is L1. The maximum radial width D1 of the connection slot 21 is greater than the maximum radial width L1 of the wiring terminal 121. This ensures that when the wiring terminal 121 is disposed within the connection slot 21, a gap exists between an exterior of the wiring terminal 121 and the walls of the connection slot 21. This facilitates tin penetration into the connection slot 21 when the wiring terminal 121 is welded to the first conductive portion 211 in the connection slot 21, ensuring weld strength. Along the axial direction of the stator assembly, the extended length H1 of the wiring terminal 121 is the height of the wiring terminal 121, and the extended length H2 of the connection slot 21 is the height of the connection slot 21. The height H1 of the wiring terminal 121 is less than the height H2 of the connection slot 21. This allows the wiring terminal 121 to be completely concealed within the connection slot 21 when located therein, preventing interference with other axially located components and preventing the occurrence of excessively short creepage distances. For stator windings 12 with larger wire diameters, winding machines are unable to wrap the winding copper wire around the pins 13, and manual operation is also impossible. Consequently, motors using large-diameter windings cannot use the main control board 2. Furthermore, to ensure connection reliability, the stator winding 12 typically requires at least three wraps around the pins 13. This results in a greater axial distance between the main control board 2 and an end face of the stator core 11, increasing the overall length of the motor. This solution also requires additional material for the pins 13, which in turn increases labor costs. Therefore, the present invention further provides a stator assembly 100 with another structure. In the present embodiment, the pins 13 do not need to be used to support and stabilize the wiring terminal 121, and the structure of the connection slot 21 of the main control board 2 can also support and clamp the wiring terminal 121.

Specifically, the connection slot 21 includes a first slot section 212, a second slot section 213, and a third slot section 214. A fourth conductive portion 215 is provided on at least a portion of an inner wall of the first slot section 212. A fifth conductive portion 216 is provided on at least a portion of an inner wall of the second slot section 213. A sixth conductive portion 217 is provided on at least a portion of an inner wall of the third slot section 214.

The wiring terminal 121 is electrically connected to at least one of the fourth conductive portion 215, the fifth conductive portion 216, and the sixth conductive portion 217 to achieve electrical connection between the stator winding 12 and the main control board 2. Specifically, the wiring terminal 121 is first inserted into the first slot section 212, or the second slot section 213, or the third slot section 214 using a tool, and then the wiring terminal 121 is welded to the first slot section 212, or the wiring terminal 121 is welded to the second slot section 213, or the wiring terminal 121 is welded to the third slot section 214. Laser welding or soldering can be used, and the soldering process can be dip soldering. Alternatively, the wiring terminal 121 can be inserted into the first slot section 212, or the second slot section 213, or the third slot section 214, and welding can be omitted. An interference fit between the wiring terminal 121 and the first slot section 212, or the second slot section 213, or the third slot section 214 is sufficient. However, compared with the interference fit method, the welding connection method is more reliable.

Specifically, the third slot section 214 extends along the axial direction of the stator assembly. Along the radial direction of the stator assembly, the first slot section 212 and the second slot section 213 extend in opposite directions, respectively. The first slot section 212, the second slot section 213 and the third slot section 214 are interconnected. The main control board 2 includes a third wall 24 and a fourth wall 25. The third wall 24 and the fourth wall 25 are disposed oppositely with each other. The third slot section 214 is located between the third wall 24 and the fourth wall 25. Along the radial direction of the stator assembly, a maximum distance between the third wall 24 and the fourth wall 25 is D2. The wiring terminal 121 is columnar, and a maximum outer diameter of the wiring terminal 121 is L2, where D2 is less than or equal to L2.

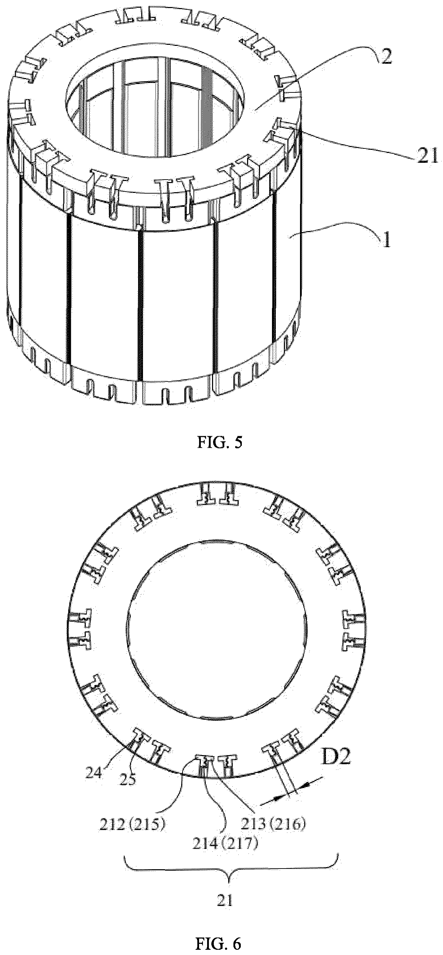

As shown in FIG. 5 to FIG. 8, the first slot section 212 and the second slot section 213 extend radially along the stator assembly. The third slot section 214 extends axially along the stator assembly. The first slot section 212, the second slot section 213, and the third slot section 214 are arranged in a T-shape. The main control board 2 includes a third wall 24 and a fourth wall 25. The third wall 24 and the fourth wall 25 are disposed oppositely with each other. The third slot section 214 is located between the third wall 24 and the fourth wall 25. The third wall 24 and the fourth wall 25 form the walls of the third slot section 214. In the radial direction of the stator assembly, the maximum distance between the third wall 24 and the fourth wall 25 is D2, meaning that the maximum radial width of the third slot section 214 is D2. The wiring terminal 121 is columnar. The maximum outer diameter of the columnar wiring terminal 121 is L2, meaning that the maximum radial width of the wiring terminal 121 is L2. The maximum radial width D2 of the third slot section 214 needs to be less than or equal to the maximum radial width L2 of the wiring terminal 121. In this way, the wiring terminal 121 snaps into the third slot section 214, and creates an interference fit between the wiring terminal 121 and the third slot section 214. The radially extending first and second slot sections 212, 213 provide space for the tin to drip. Furthermore, the interconnected arrangement of the first slot section 212, the second slot section 213, and the third slot section 214 ensures that the wiring terminal 121 in the third slot section 214 fuses with the conductive portion and tin within the connection slot 21, further enhancing the weld strength between the wiring terminal and the main control board.

The present invention provides a manufacturing method of a stator assembly 100 in accordance with a first embodiment, specific steps of which are as follows:
performing insert molding on a single stator core 11 to form a stator core 11 with an insulating frame 14;
winding a stator winding 12 onto the stator core 11 with the insulating frame 14, and forming two wiring terminals 121 for each stator winding 12;
splicing the single stator core 11 wound with the stator winding 12 along a circumferential direction to form a stator 1;
mounting a main control board 2 with connection slots 21 at an axial outer end of the stator 1, and mounting the wiring terminals 121 in the connection slots 21 in a one-to-one correspondence manner; and
electrically connecting the wiring terminal 121 to a first conductive portion 211 on an inner wall of the connection slot 21.

The manufacturing method of the stator assembly in this embodiment can be used for stator windings 12 of various wire diameters. The wiring terminal 121 can be placed inside the connection slot 21 manually, and this can also be achieved manually.

The present invention also provides a manufacturing method for a stator assembly 100 in accordance with a second embodiment, specific steps of which are as follows:
performing insert molding on a single stator core 11 and a plurality of pins 13 together to form a stator core 11 with an insulating frame 14;
winding a stator winding 12 onto the stator core 11 with the insulating frame 14, and forming two wiring terminals 121 for each stator winding 12; and winding the wiring terminal 121 around an outside of the pin 13;
splicing the single stator core 11 wound with the stator winding 12 along a circumferential direction of the stator assembly 100 to form a stator 1;
mounting a main control board 2 with connection slots 21 at an axial outer end of the stator 1, and mounting the wiring terminals 121 in the connection slots 21 in a one-to-one correspondence manner; and
electrically connecting a second conductive portion 122 of the wiring terminal 121, a first conductive portion 211 of an inner wall of the connection slot 21, and a third conductive portion 131 of the pin 13; or electrically connecting a second conductive portion 122' of the wiring terminal 121 to the first conductive portion 211 of the inner wall of the connection slot 21.

The manufacturing method for the stator assembly in this embodiment is more commonly used in motors with relatively small stator winding wire diameters, where the pins 13 can play a role in supporting and stabilizing the stator windings to a certain extent.

The stator assembly manufactured by the above-mentioned manufacturing method for the stator assembly has a simple connection structure of the stator winding and is easy to install.

The present invention further provides a motor 10 including the stator assembly 100 according to any of the above designs. Thus, the motor 10 possesses all the benefits of the stator assembly. Specifically, the connection structure of the stator winding is simple and easy to install, which can significantly improve the production efficiency of the motor 10.

Furthermore, the motor 10 further includes a shell 300 and a rotor assembly 200. The stator assembly 100 is disposed in the shell 300. The stator assembly 100 includes the stator 1 and the main control board 2 arranged at the axial outer end of the stator 1. The stator 1 is spliced together by the plurality of stator cores 11. The stator winding 12 is wound around each stator core 11. The stator winding 12 has a wiring terminal 121. The main control board 2 defines the plurality of connection slots 21 which are spaced apart. At least part of the inner circumferential wall of each connection slot 21 is provided with the first conductive portion 211. The wiring terminal 121 is located in the connection slot 21. The wiring terminal 121 is electrically connected to the first conductive portion 211, thereby realizing the conduction of the stator winding 12 and the circuit on the main control board 2.

In the present invention, the term "plurality of" refers to two or more, unless otherwise specified. Terms such as "mounting", "connecting", "connection" and "fixing" should be interpreted broadly, for example, the term "connection" can mean a fixed connection, a detachable connection, or an integral connection; and the term "connecting" can mean a direct connecting or an indirect connecting through an intermediary. It is understandable to those skilled in the art that the specific meanings of the above terms in the present invention based on the specific circumstances.

The foregoing description is merely a preferred embodiment of the present invention and is not intended to limit the present invention. Those skilled in the art will readily appreciate that various modifications and variations of the present invention are possible. Any modifications, equivalent substitutions, or improvements made within the spirit and principles of the present invention are intended to be within the protection scope of the present invention.

## Claims

1. A stator assembly (100), comprising: a stator (1) and a main control board (2) disposed at an axial outer end of the stator (1), the stator (1) comprising a plurality of stator cores (11), the stator cores (11) being wound with stator windings (12), the stator windings (12) comprising wiring terminals (121);
wherein the main control board (2) defines at least two connection slots (21) which are spaced apart; at least a portion of an inner peripheral wall of each connection slot (21) is provided with a first conductive portion (211); the wiring terminal (121) is disposed in the connection slot (21); and the wiring terminal (121) is electrically connected to the first conductive portion (211).

2. The stator assembly according to claim 1, wherein an outer periphery of the main control board (2) defines the at least two connection slots (21) which are spaced apart along a circumferential direction of the main control board (2); and the connection slots (21) are opened outward along a radial direction of the main control board (2), and are disposed in a one-to-one correspondence manner with the wiring terminals (121).

3. The stator assembly according to claim 2, wherein the stator (1) further comprises a plurality of pins (13) and an insulating frame (14); a material of the pin (13) is metal or insulating material; the insulating frame (14) is sleeved over an axial outer end of the stator core (11); one end of the pin (13) is inserted into the insulating frame (14), and another end of the pin (13) is recessed and disposed in the connection slot (21); the wiring terminal (121) is located within the connection slot (21), and the wiring terminal (121) is wound around at least a portion of an outer side of the pin (13).

4. The stator assembly according to claim 3, wherein the material of the pin (13) is metal material; the wiring terminal (121) is provided with a second conductive portion (122); the pin (13) is provided with a third conductive portion (131); and the first conductive portion (211), the second conductive portion (122) and the third conductive portion (131) are electrically connected to one another.

5. The stator assembly according to claim 3, wherein the material of the pin (13) is insulating material; the wiring terminal (121) is provided with a second conductive portion (122'); and the first conductive portion (211) and the second conductive portion (122') are electrically connected with each other.

6. The stator assembly according to any one of claims 1 to 5, wherein the main control board (2) comprises a first wall (22) and a second wall (23); the first wall (22) and the second wall (23) are disposed oppositely; the connection slot (21) is located between the first wall (22) and the second wall (23); along a radial direction of the stator assembly, a farthest distance between the first wall (22) and the second wall (23) is D1; the wiring terminal (121) is columnar, and a maximum outer diameter of the wiring terminal (121) is L1, where D1 is greater than L1.

7. The stator assembly according to claim 6, wherein along an axial direction of the stator assembly, an extension length of the wiring terminal (121) is H1; and along the axial direction of the stator assembly, an extension length of the connection slot (21) is H2, where H1 is less than or equal to H2.

8. The stator assembly according to claim 1, wherein the connection slot (21) has a first slot section (212), a second slot section (213) and a third slot section (214); at least a portion of an inner wall of the first slot section (212) is provided with a fourth conductive portion (215); at least a portion of an inner wall of the second slot section (213) is provided with a fifth conductive portion (216); at least a portion of an inner wall of the third slot section (214) is provided with a sixth conductive portion (217);
the wiring terminal (121) is electrically connected to at least one of the fourth conductive portion (215), the fifth conductive portion (216) and the sixth conductive portion (217).

9. The stator assembly according to claim 8, wherein the third slot section (214) extends along an axial direction of the stator assembly; along a radial direction of the stator assembly, the first slot section (212) and the second slot section (213) extend in opposite directions respectively; and the first slot section (212), the second slot section (213) and the third slot section (214) are interconnected.

10. The stator assembly according to claim 9, wherein the main control board (2) comprises a third wall (24) and a fourth wall (25); the third wall (24) and the fourth wall (25) are disposed oppositely; the third slot section (214) is located between the third wall (24) and the fourth wall (25); along the radial direction of the stator assembly, a farthest distance between the third wall (24) and the fourth wall (25) is D2; the wiring terminal (121) is columnar, and a maximum outer diameter of the wiring terminal (121) is L2, wherein D2 is less than or equal to L2.

11. The stator assembly according to any one of claims 1 to 5, wherein each stator core (11) is wound with the stator winding (12), and each stator winding (12) has two wiring terminals (121) which are electrically connected to corresponding connection slots (21), respectively.

12. The stator assembly according to claim 7, wherein the wiring terminal (121) and the first conductive portion (211) are electrically connected by soldering or laser welding.

13. A manufacturing method for a stator assembly (100), comprising following steps:
performing insert molding on a single stator core (11) to form a stator core (11) with an insulating frame (14); winding a stator winding (12) onto the stator core (11) with the insulating frame (14), and forming a wiring terminal (121) for each stator winding (12); splicing the single stator core (11) wound with the stator winding (12) along a circumferential direction to form a stator (1); mounting a main control board (2) with connection slots (21) at an axial outer end of the stator (1), and mounting the wiring terminals (121) in the connection slots (21) in a one-to-one correspondence manner; and electrically connecting the wiring terminal (121) to a first conductive portion (211) on an inner wall of the connection slot (21) by welding.

14. An electric motor, comprising: a stator assembly (100), a rotor assembly (200) and a shell (300), the stator assembly (100) being disposed in the shell (300), the stator assembly (100) comprising a stator (1) and a main control board (2) disposed at an axial outer end of the stator (1), the stator (1) comprising a plurality of stator cores (11), the stator cores (11) being wound with stator windings (12), the stator windings (12) comprising wiring terminals (121); wherein the main control board (2) has at least two connection slots (21) which are spaced apart; at least a portion of an inner wall of each connection slot (21) is provided with a first conductive portion (211); and the wiring terminal (121) is disposed in the connection slot (21), and the wiring terminal (121) is electrically connected to the first conductive portion (211).
